## Europäisches Patentamt
## European Patent Office
## Office européen des brevets

(19)

(11) Numéro de publication: **0 219 376**
**B1**

(12)

# FASCICULE DE BREVET EUROPEEN

(45) Date de publication du fascicule du brevet:
**26.04.89**

(51) Int. Cl.⁴: **B23Q 11/00**, B23Q 3/06

(21) Numéro de dépôt: **86401941.9**

(22) Date de dépôt: **04.09.86**

(54) Dispositif de buse d'arrosage pour le refroidissement de l'outil d'une machine-outil.

(30) Priorité: **11.09.85 FR 8513462**

(43) Date de publication de la demande:
**22.04.87 Bulletin 87/17**

(45) Mention de la délivrance du brevet:
**26.04.89 Bulletin 89/17**

(84) Etats contractants désignés:
**BE DE GB IT NL**

(56) Documents cités:
**CH-A- 241 054
FR-A- 2 114 153
FR-A- 2 302 167
FR-A- 2 323 496
JP-A-58 059 746
US-A- 2 420 905
US-A- 3 617 141**

(73) Titulaire: **AEROSPATIALE SOCIETE NATIONALE INDUSTRIELLE**, 37, Boulevard de Montmorency,
**F-75781 Paris Cédex 16(FR)**

(72) Inventeur: **Cantin, Pierre, La Bourrelière,
F-44120 Vertou(FR)**

(74) Mandataire: **Barnay, André François, Cabinet Barnay 80 rue Saint-Lazare, F-75009 Paris(FR)**

## Description

La présente invention concerne d'une façon générale les machines-outils et elle est plus particulièrement relative à l'arrosage de l'outil, en cours de travail, avec un fluide de refroidissement.

Dans la plupart des machines-outils, par exemple les tours, les perceuses, les aléseuses, les fraiseuses et autres, il est nécessaire de refroidir l'outil afin d'éviter qu'il atteigne une température trop élevée susceptible de le détériorer.

Dans les machines-outils dans lesquelles la profondeur de coupe est invariable au cours d'une même passe de travail cet arrosage ne pose aucun problème particulier et est assuré par un tuyau fixé par exemple sur la broche, ou sur une partie fixe de la machine telle que le bâti, avec à son extrémité de sortie une buse située à une distance fixe de la partie active de l'outil de telle sorte que l'agent de refroidissement, habituellement un liquide spécial, est toujours envoyé sur cette même partie de l'outil pendant le travail, sans problème.

Il n'en est pas de même dans les machines-outils telles que les perceuses, les aléseuses et autres, dans lesquelles l'outil se déplace axialement par rapport à la pièce à usiner.

En effet, dans les machines de ce type, si le tuyau d'arrivée de l'agent de refroidissement est fixé sur une partie stationnaire de la machine, par exemple sur le bâti ou la glissière sur laquelle est monté le chariot, la buse d'arrosage restant à une distance constante de la surface de la pièce doit être réglée dans une position intermédiaire par rapport à la longueur de l'outil et située à une distance fixe de la surface de la pièce, de sorte que l'outil n'est pas refroidi de façon rationnelle et efficace, sa partie en contact avec la pièce s'éloignant de la buse au fur et à mesure de la progression de la course de travail.

Si au contraire le tuyau amenant le fluide de refroidissement est monté sur une partie mobile de la machine, par exemple sur le chariot porte-broche, la distance de la buse à la pièce étant variable, cette buse doit également être située dans une position intermédiaire par rapport à la longueur de l'outil, telle que celui-ci puisse pénétrer dans la pièce d'une distance suffisante sans venir buter sur celle-ci avant la fin de la course de travail.

Il ressort de ce qui précède que dans les deux cas l'arrosage pour assurer le refroidissement de l'outil n'est pas effectué de façon satisfaisante.

FR-A 2 323 496 décrit une machine-outil à outil rotatif comportant une chambre d'aspiration ouverte vers le bas pour le passage de l'outil et dont la paroi entoure ce dernier, un ressort forçant la paroi vers la pièce à usiner et au moins une buse disposée à l'intérieur de cette chambre et adaptée pour être reliée à une source extérieure de fluide sous pression.

Cet agencement est adapté pour être utilisé sur une machine travaillant indifféremment parallèlement ou perpendiculairement à la surface de la pièce à usiner et comportant une centrale d'aspiration et une centrale de pressurisation.

L'évacuation des copeaux est nécessaire dans le cas d'un fraisage ou d'un détourage par enlèvement d'une quantité importante de matière, produisant un volume encore plus important de copeaux.

Ces différents moyens sont inutilement encombrants et coûteux dans le cas d'une perceuse ou d'une aléseuse ne produisant qu'un volume négligeable de copeaux et dans lesquelles seul le refroidissement de l'outil est nécessaire.

L'invention a en conséquence pour but de fournir un dispositif simple et peu coûteux pour refroidir l'outil d'une machine-outil ne travaillant que dans le sens axial de l'outil.

L'invention a pour objet à cet effet un dispositif à buse d'arrosage d'outil rotatif avec un fluide de refroidissement, adaptable sur une machine-outil, et comprenant deux supports télescopiques, chacun desdits supports comportant une première partie prévue pour être montée sur chaque côté du nez de l'outil et parallèlement à l'axe de cet outil sur la même partie mobile de la machine que cet outil, une seconde partie montée mobile télescopiquement axialement par rapport à l'outil sur ladite première partie et portant ladite buse d'arrosage au voisinage de l'extrémité de l'outil et des moyens élastiques forçant ladite seconde partie vers la pièce à usiner, de façon que ladite buse d'arrosage soit située à une distance constante du point à usiner de la pièce pendant la totalité de la course de travail.

Suivant une autre caractéristique de l'invention, ledit support est monté sur le nez de borche de la machine et présente une longueur supérieure à celle de ladite broche et de l'outil.

La description qui va suivre, en regard du dessin annexé à titre d'exemple non limitatif, permettra de bien comprendre comment l'invention peut être mise en pratique.

La figure 1 est une vue latérale en coupe partielle d'un dispositif suivant l'invention monté sur le nez de broche d'une perceuse dont le foret est en contact avec la pièce à percer.

La figure 2 est une vue analogue à celle de la figure 1 montrant la position des supports à la fin de l'opération de perçage.

La figure 3 est une vue partielle en coupe avec arrachement d'un organe porte-buse, prise suivant la ligne III–III de la figure 1.

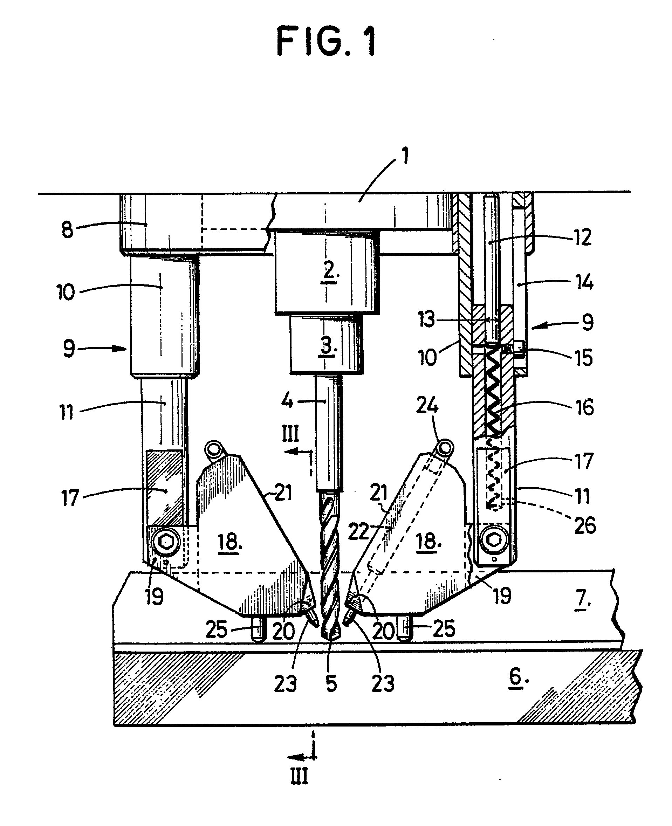

En se référant au dessin, on a représenté à la figure 1 le nez de broche 1 d'une machine à percer automatique comportant une broche 2 et un mandrin 3 dans lequel est fixé un foret 4.

Sur cette figure l'extrémité 5 du foret est représentée en contact avec la surface d'un ouvrage à percer, constitué par une plaque 6 portant un raidisseur représenté par une cornière 7, à l'instant précédant le commencement du travail.

Suivant l'invention la machine comporte un dispositif d'arrosage du foret 4, qui comprend, dans l'exemple de réalisation représenté, une couronne circulaire de fixation 8 montée fixe sur le nez de broche 1 par un moyen quelconque connu, non représenté, tel que des vis.

La couronne 8 porte deux supports télescopiques désignés chacun d'une façon générale par la référence 9, fixés en deux points opposés de sa circonférence et qui s'étendent vers le bas parallèlement au foret 4, de part et d'autre de celui-ci, l'ensemble ayant la forme d'un étrier.

Les supports 9 étant identiques, il n'en sera décrit qu'un seul d'entre eux.

Chaque support 9 est formé de deux tubes 10, 11 emmanchés télescopiquement l'un dans l'autre, le tube 10, dans lequel coulisse le tube 11, étant fixé dans la couronne 8, par exemple par vissage.

A l'intérieur du tube 10 est montée coaxialement une tige 12, également fixée dans la couronne 8, cette tige étant engagée par son extrémité dans un alésage borgne 13 du tube 11.

Le tube 10 comporte dans sa paroi une fente 14 s'étendant longitudinalement sur une partie de sa longueur et dans laquelle est engagé un ergot 15 faisant saillie radialement sur le tube 11 afin de limiter la course télescopique de celui-ci dans le tube 10 et de l'immobiliser en rotation.

Dans l'alésage borgne 13 du tube 11 est logé un ressort 16 prenant appui d'une part sur l'extrémité de la tige fixe 12 et d'autre part sur le fond de l'alésage borgne 13, ce ressort sollicitant le tube 11 en position d'extension par rapport au tube 10. D'une façon appropriée, le diamètre du ressort 16 est égal au diamètre intérieur du tube 10.

Le tube 11 comporte à son extrémité externe des méplats parallèles 17 sur lesquels est fixé un organe porte-buse 18, au moyen de pattes 19 solidaires de celui-ci, par des boulons.

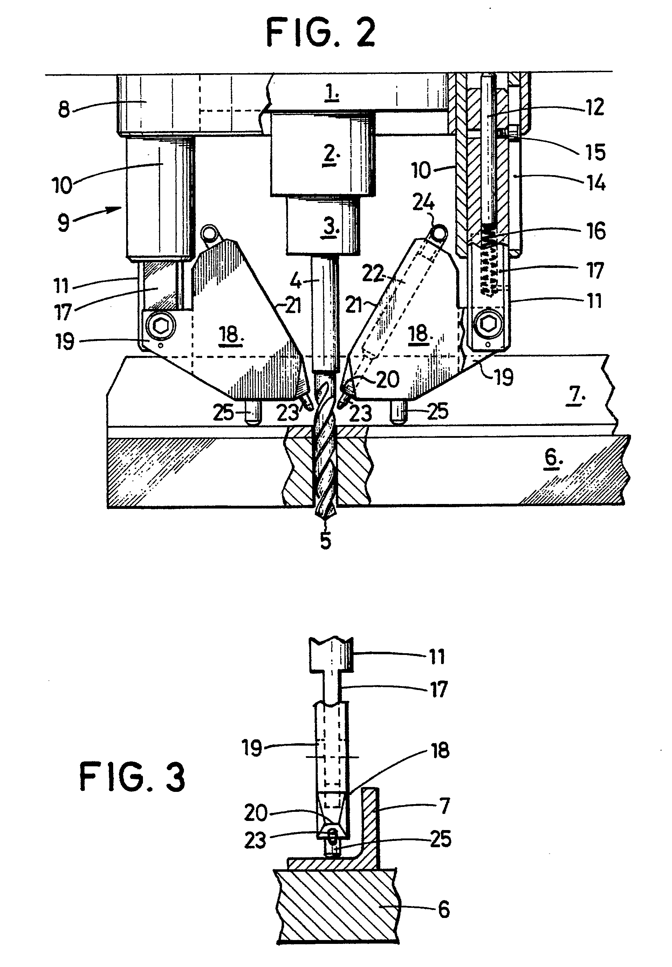

L'organe 18 présente dans son ensemble une forme à peu près triangulaire ayant une épaisseur à peu près égale au diamètre du tube 11 (figure 3) et comporte un côté 21 orienté vers le foret, dans le plan défini par celui-ci et le support 9, l'agencement étant tel que l'organe 18 présente un angle inférieur 20 au voisinage de l'extrémité 5 du foret, le bord 21 étant incliné vers le haut en s'éloignant de celui-ci.

L'organe 18 porte-buse comporte, dans son épaisseur, un alésage 22 parallèle à son bord 21, à une extrémité duquel est fixée, à l'angle inférieur 20, une buse 23 d'arrosage du foret, orientée vers son extrémité 5.

A l'extrémité opposée de l'alésage 22 est fixé un raccord 24 pour un tuyau d'arrivée de liquide de refroidissement relié à une source d'alimentation appropriée (non représentée). La buse 23 est amovible et peut être remplacée par une autre de diamètre différent en fonction du débit de liquide désiré.

Il est enfin prévu un téton 25 en saillie sur le bord inférieur de l'organe 18, l'agencement étant tel qu'à partir du nez 1 de broche, la somme des longueurs du tube 11, de l'organe 18 et du téton 25, dans la position d'extension complète du tube 11, soit un peu supérieure à la somme des longueurs de la broche 2, du mandrin 3 et du foret 4.

On comprend que grâce à ce dispositif, lorsque la pointe 5 du foret est abaissée vers la pièce à percer, le téton 25 de chaque organe 18 entre en contact avec la pièce avant l'extrémité du foret 4.

Grâce au montage des supports télescopiques, lorsque la broche 2 continue de descendre, les tétons 25, arrêtés sur la surface de la pièce à percer, astreignent les tubes 11 à coulisser en rentrant dans les tubes 10 à l'encontre de l'action des ressorts 16, les buses 23 étant maintenues à une distance constante de la surface de la pièce par les tétons 25 et arrosant ainsi constamment la partie du foret 4 voisine de cette surface.

On notera qu'il est prévu dans le tube 11, au voisinage de l'extrémité borgne de l'alésage 13, un trou 26 permettant à l'air prisonnier entre la tige 12 et le fond de cet alésage de s'échapper lorsque le tube 11 entre dans le tube 10, l'air se trouvant dans ce dernier s'échappant par la fente 14.

On remarquera également que dans une variante (non représentée), la tige 12 peut être supprimée et le ressort sollicitant le tube 11 en extension peut être disposé directement dans le tube 10, entre le nez de broche 1 et l'extrémité interne du tube 11.

La forme plate des organes porte-buses 18 permet le passage du dispositif le long des raidisseurs 7 et de percer des trous adjacents à ceux-ci, comme cela apparait à la figure 3.

Bien entendu, l'invention n'est pas limitée au mode de réalisation représenté et décrit auquel des modifications peuvent être apportées sans s'écarter de l'étendue de la protection. Par exemple les tétons 25 peuvent être remplacés par des appendices venus de matière avec les organes 18 qui, eux-mêmes, peuvent être également venus de matière avec les tubes 11.

La couronne 8 peut être montée orientable sur le nez de broche, sa position angulaire pouvant être commandée par un programme de logiciel dans le cas d'une machine automatique à commande électronique.

Enfin le système télescopique à ressort des tubes 10 et 11 de chaque support 9 peut être remplacé dans une variante, non représentée, par un système asservi, hydraulique ou autre.

## Revendications

1. Dispositif à buse d'arrosage d'outil rotatif avec un fluide de refroidissement, adaptable sur une machine-outil, et comprenant deux supports télescopiques (9), chacun desdits supports comportant une première partie (8, 10) prévue pour être montée sur chaque côté du nez de l'outil (4) et parallèlement à l'axe de cet outil sur la même partie mobile (1) de la machine que cet outil, une seconde partie (11, 18) montée télescopiquement axialement par rapport à l'outil sur ladite première partie (8, 10) et portant ladite buse d'arrosage (23) au voisinage de l'extrémité (5) de l'outil et des moyens élastiques (16) forçant ladite seconde partie vers la pièce à usiner, de façon que ladite buse d'arrosage (23) soit située à une distance constante du point à usiner de la pièce pendant la totalité de la course de travail.

2. Dispositif suivant la revendication 1, caractérisé en ce que la longueur desdits supports (9) en position d'extension, est au moins égale et de préférence légèrement supérieure à la longueur totale de la broche (2, 3) et de l'outil (4), dans l'état de repos de la machine.

3. Dispositif suivant la revendication 2, caractérisé en ce que lesdits supports (9) sont constitués par les branches d'un étrier (8, 9) fixé par sa partie intermédiaire (8) sur le nez (1) de broche de la machine.

4. Dispositif suivant la revendication 3, caractérisé en ce que ladite partie intermédiaire (8) a la forme d'une couronne circulaire, lesdites branches parallèles (9) étant fixées en deux points diamétralement opposés de ladite couronne, perpendiculairement à celle-ci.

5. Dispositif suivant l'une quelconque des revendications 1 à 4, caractérisé en ce que lesdites buses (23) sont fixées chacune sur un organe porte-buse (18) monté en porte-à-faux à l'extrémité d'un support télescopique (9) entre celui-ci et l'outil (4) et dans lequel s'étend un tuyau d'alimentation en fluide de refroidissement relié à ladite buse.

6. Dispositif suivant la revendication 5, caractérisé en ce que chaque buse (23) fait saillie obliquement dudit organe (18), vers le bas et vers l'extrémité (5) de l'outil (4), au voisinage de celle-ci, une butée (25) étant prévue en saillie sur la partie inférieure dudit organe (18).

7. Dispositif suivant la revendication 6, caractérisé en ce que lesdits organes porte-buse (18) sont disposés dans le plan défini par lesdits supports (9) et l'outil (4).

8. Machine-outil, notamment une perceuse ou une aléseuse, caractérisée en ce qu'elle comporte un dispositif tel que défini suivant l'une quelconque des revendications 1 à 7.

## Patentansprüche

1. Düsenvorrichtung zum Bespülen des verdrehbaren Werkzeuges mit einer Kühlflüssigkeit für eine Werkzeugmaschine, welche zwei Teleskophalter (9) besitzt, wobei jeder dieser Halter ein erstes Teil (8, 10) aufweist, welches auf jeder Seite der Spitze des Werkzeuges (4) und parallel zur Achse dieses Werkzeuges auf dem gleichen beweglichen Teil (1) der Maschine montierbar ist wie dieses Werkzeug, ferner ein zweites Teil (11, 18), welches in Bezug auf das Werkzeug auf dem ersten Teil (8, 10) teleskopisch axial bewegbar montiert ist und die Kühlmitteldüse (23) nahe dem Ende (5) des Werkzeuges trägt, und elastische Anordnungen (16), welche das zweite Teil auf das zu bearbeitende Werkstück pressen, sodaß die Kühlmitteldüse (23) in einer konstanten Entfernung von der zu bearbeitenden Stelle des Werkstückes während des gesamten Verlaufes der Arbeit liegt.

2. Vorrichtung nach Anspruch 1, dadurch gekennzeichnet, daß die Länge der Halter (9) in ausgefahrener Position mindestens gleich und vorzugsweise etwas länger ist als die Gesamtlänge der Spindel (2, 3) des Werkzeugs (4) im Ruhezustand der Maschine.

3. Vorrichtung nach Anspruch 2, dadurch gekennzeichnet, daß die Halter (9) durch die Schenkel eines Bügels (8, 9) gebildet sind, welcher mit seinem Zwischenteil (8) auf der Spindelspitze (1) der Maschine befestigt ist.

4. Vorrichtung nach Anspruch 3, dadurch gekennzeichnet, daß das Zwischenteil (8) die Form eines Kreisringes besitzt, die parallelen Schenkel (9) an zwei diametral einander gegenüberliegenden Punkten des Ringes befestigt sind, und zwar rechtwinklig zu demselben.

5. Vorrichtung nach irgendeinem der Ansprüche 1 bis 4, dadurch gekennzeichnet, daß die Düsen (23) jeweils auf einem Düsenträgerorgan (18) befestigt sind, welches fliegend am Ende eines Teleskophalters (9) zwischen demselben und dem Werkzeug (4) gelagert ist, und in welchem sich eine Speiseleitung für das Kühlmittel erstreckt, welche mit der Düse verbunden ist.

6. Vorrichtung nach Anspruch 5, dadurch gekennzeichnet, daß jede Düse (23) schräg nach unten und zum Ende (5) des Werkzeuges (4) aus dem Organ (18) in der Nähe des Werkzeuges herausragt, wobei ein Anschlag (25) auf dem unteren Teil des Organes (18) vorspringend vorgesehen ist.

7. Vorrichtung nach Anspruch 6, dadurch gekennzeichnet, daß die Düsentragorgane (18) in der durch die Halter (9) und das Werkzeug (4) definierten Ebene angeordnet sind.

8. Werkzeugmaschine, insbesondere eine Bohrmaschine oder ein Bohrwerk, dadurch gekennzeichnet, daß sie eine Vorrichtung gemäß irgendeinem der Ansprüche 1 bis 7 aufweist.

## Claims

1. A device with a spray nozzle for spraying a rotating tool with a cooling fluid, which can be fitted on a machine tool and which comprises two telescopic supports (9), each of said supports comprising a first part (8, 10) arranged to be mounted on each side of the nose of the tool (4) and parallel to the axis of this tool on the same movable part (1) of the machine as this tool, a second part (11, 18) mounted to move telescopically axially in relation to the tool on said first part (8, 10) and carrying said spray nozzle (23) in the vicinity of the tip (5) of the tool and resilient means (16) urging said second part towards the workpiece to be machined, so that said spray nozzle (23) is situated at a constant distance from the point of the workpiece to be machined throughout the entire working stroke.

2. A device according to claim 1, characterised in that the length of said supports (9) in the extended position is at least equal and, preferably, slightly greater than the total length of the spindle (2, 3) and of the tool (4) in the inoperative position of the machine.

3. A device according to claim 2, characterised in that said supports (9) are formed by the arms of a stirrup (8, 9) secured by its intermediate part (8) to the nose (1) of the machine spindle.

4. A device according to claim 3, characterised in that said intermediate part (8) is in the form of a circular ring, said parallel arms (9) being secured at two diametrically opposite points of said ring, and perpendicularly thereto.

5. A device according to any one of claims 1 to 4, characterised in that said nozzles (23) are each secured to a nozzle holder member (18) mounted in overhanging fashion at the end of a telescopic support (9) between the latter and the tool (4), and into which extends a supply pipe for cooling fluid connected to said nozzle.

6. A device according to claim 5, characterised in that each nozzle (23) projects downwards obliquely to said member (18) and towartds the tip (5) of the tool (4), in the vicinity thereof, a stop member (25) being provided projecting beyond the lower portion of said member (18).

7. A device according to claim 6, characterised in that said nozzle holder members (18) are disposed in the plane defined by said supports (9) and the tool (4).

8. A machine tool, in particular a drilling or boring machine, characterised in that it comprises a device such as that defined in accordance with any one of claims 1 to 7.

EP 0 219 376 B1

# FIG. 1

# FIG. 2

# FIG. 3